Europäisches Patentamt

European Patent Office

Office européen des brevets

(11) Numéro de publication : **0 407 261 B1**

(12) **FASCICULE DE BREVET EUROPEEN**

(45) Date de publication du fascicule du brevet :
07.01.93 Bulletin 93/01

(51) Int. Cl.⁵ : **F16H 7/12**

(21) Numéro de dépôt : **90401813.2**

(22) Date de dépôt : **26.06.90**

(54) **Tendeur pour courroie de transmission.**

(30) Priorité : **06.07.89 FR 8909099**
**10.04.90 FR 9004575**

(43) Date de publication de la demande :
**09.01.91 Bulletin 91/02**

(45) Mention de la délivrance du brevet :
**07.01.93 Bulletin 93/01**

(84) Etats contractants désignés :
**BE DE ES FR GB IT LU NL SE**

(56) Documents cités :
**EP-A- 0 045 497**
**EP-A- 0 243 237**
**EP-A- 0 291 254**
**WO-A-83/03700**
**WO-A-89/01098**
**FR-A- 617 246**
**FR-A- 2 393 984**
**GB-A- 2 208 130**

(56) Documents cités :
**US-A- 2 038 968**
**US-A- 4 790 801**
**PATENT ABSTRACTS OF JAPAN vol. 11, no. 6**
**(M-551)(2453) 08 janvier 1987, & JP-A-61**
**184238 (HONDA) 16 août 1986,**

(73) Titulaire : **HUTCHINSON**
**2 rue Balzac**
**F-75008 Paris (FR)**

(72) Inventeur : **Georget, Pierre**
**10, rue des Perriers**
**F-37179 Chambray-Les-Tours (FR)**
Inventeur : **Rousseau, Christophe**
**266 Avenue de Grammont**
**F-37000 Tours (FR)**
Inventeur : **Verdier, Parcel**
**91 Boulevard de Chinon**
**F-37300 Joue-Les-Tours (FR)**

(74) Mandataire : **Orès, Bernard et al**
**Cabinet ORES 6, Avenue de Messine**
**F-75008 Paris (FR)**

Jouve, 18, rue Saint-Denis, 75001 PARIS

## Description

L'invention a pour objet un tendeur pour courroie de transmission de puissance comme défini dans le préambule de la revendication 1 connu du EP-A 243237.

On sait qu'un système de transmission de puissance par courroie d'un arbre à un autre exige la présence d'un tendeur de courroie pour l'obtention d'un fonctionnement satisfaisant et l'on a déjà proposé, par conséquent, de nombreux dispositifs de tendeurs comportant un ressort métallique d'une part et des moyens pour amortir les vibrations engendrées dans la courroie par les irrégularités cycliques du régime moteur, d'autre part.

Si de tels dispositifs connus, par exemple par US-A-4 525 152 ou WO83/00731, ou EP-A1-0243237 au nom de la Demanderesse, donnent satisfaction, ils sont généralement de structure complexe, donc de prix et d'encombrement importants.

C'est, par conséquent, un but général de l'invention de fournir un tendeur pour courroie de transmission de puissance de structure particulièrement simple, pouvant ainsi être fabriqué dans de bonnes conditions économiques et qui, en outre, de faible encombrement, soit particulièrement bien approprié à son emploi dans l'industrie automobile où, comme on le sait, l'espace disponible sous le capot moteur est réduit.

C'est, aussi, un but de l'invention de fournir un dispositif qui soit d'un large domaine d'emploi quelles que soient les caractéristiques du ressort mis en oeuvre, en particulier un ressort présentant des caractéristiques mécaniques et géométriques telles qu'il peut en résulter un risque de flambage.

Un tendeur pour courroie de transmission de puissance selon l'invention est défini par les caractéristiques de la revendication 1.

Dans une forme de réalisation préférée de l'invention, le ressort du dispositif est un ressort hélicoïdal à boudin, travaillant en compression, rendu solidaire par adhérisation de la face externe de la gaine de caoutchouc de forme générale cylindrique introduisant l'effet d'amortissement, les obturateurs d'extrémités limitant longitudinalement la chambre formée par la gaine étant sertis à étanchéité sur cette dernière.

Dans une forme de réalisation de l'invention, à l'ajutage ménagé dans un au moins des obturateurs de la gaine est associé un dispositif introduisant une perte de charge permettant de moduler complémentairement l'effet d'amortissement.

Dans un mode d'exécution préféré d'une telle réalisation, le dispositif introduisant une perte de charge est un clapet, un bouchon de métal fritté ou organe analogue.

Dans une forme de réalisation avantageuse du dispositif selon l'invention, celui-ci comprend, pour son montage dans un système de transmission de puissance par courroie, un premier oeil solidaire d'un des obturateurs d'extrémité de la chambre et un second oeil solidaire de l'autre obturateur avec lequel coopère un organe du type levier monté à pivotement et qui porte ledit galet coopérant avec la courroie de transmission.

Le matériau constitutif de la gaine de caoutchouc est choisi en fonction des caractéristiques d'amortissement souhaitées, d'une part, et des conditions de l'environnement d'utilisation d'autre part : il est avantageusement choisi parmi au moins un des éléments des familles d'élastomères suivantes :

| | | |
|---|---|---|
| - N.R. | CSM | Epichlorhydrine C.O. |
| - SBR | CR | Epichlorhydrine E.C.O. |
| - BR | NBRPVC | P.E. chloré |
| - C.R. | IR | P.E. chlorosulfoné |
| - HNBR | I.I.R . | Elastomère fluoré |
| - NBR | Bromobutyl | Caoutchouc polysulfuré |
| - EPDM | Chlorobutyl | Caoutchouc polyacrylique |
| - EPR | Ethylène acrylique élastomère | |
| - P.U. | PTFE | |
| - Elastomères | FPM | |
| de silicone | | |

Dans une réalisation particulièrement préférée on prévoit, à l'intérieur de la gaine en élastomère définissant la chambre du tendeur, des moyens de guidage, l'une par rapport à l'autre, des extrémités de ladite chambre lors de leur déplacement relatif.

Dans une forme de réalisation, ces moyens de guidage sont constitués par un ensemble de tige et de tube fixés à l'un et l'autre des deux obturateurs, respectivement, les matériaux constitutifs de la tige et du tube étant choisis parmi les aciers ou autres alliages à base de fer, l'aluminium et ses alliages, le cuivre et ses alliages, l'étain et ses alliages, le plomb et ses alliages.

Dans une exécution préférée, les matériaux de la tige et du tube sont des aciers de dureté égale ou supérieure à 60 HRC (dureté ROCKWELL).

Selon une autre caractéristique de l'invention le tube et la tige sont en le même matériau.

En variante, le tube et la tige sont en des matériaux différents.

Quel que soit le mode de réalisation, l'invention prévoit complémentairement de lubrifier les organes de guidage des extrémités de la chambre du tendeur, le plus simplement à l'aide d'une huile choisie parmi les huiles usuelles pour le graissage d'organes mécaniques ou parmi les graisses du type de celles utilisées pour les roulements à billes.

En variante, l'invention prévoit que les organes de guidage soient du type auto-lubrifiés.

Dans un mode d'exécution de l'invention, celle-ci envisage, en outre, de faire application des organes de guidage pour imposer une pré-contrainte au ressort mis en oeuvre, et cela à l'aide de moyens d'encliquetage empêchant le ressort de prendre toute l'extension qui serait autrement possible.

L'invention sera bien comprise par la description qui suit, faite à titre d'exemple et en référence au dessin annexé dans lequel :

- la figure 1 est une vue schématique d'un système de transmission à courroie ;
- la figure 2 est une vue en coupe longitudinale d'un tendeur selon l'invention ;
- la figure 3 est une vue schématique illustrant le montage du tendeur dans un système tel que montré sur la figure 1 ;
- la figure 4 est une vue à grande échelle partielle illustrant l'adhérisation d'une gaine de caoutchouc au ressort du tendeur ;
- la figure 5 est une vue schématique en élévation avec arrachements partiels d'un dispositif selon l'invention pour une autre forme de réalisation ;
- la figure 6 est une vue analogue à celle de la figure 5, mais pour une autre forme de réalisation ;
- les figures 7A, 7B et 7C sont des vues de détail de la forme de réalisation illustrée sur la figure 6.

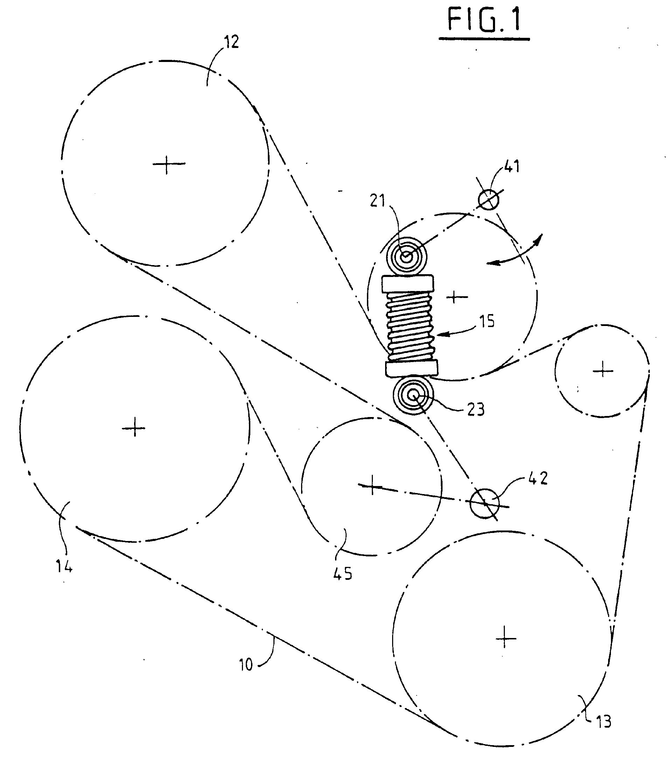

On se réfère d'abord à la figure 1 qui illustre, très schématiquement, un système de transmission de puissance dans lequel une courroie 10 coopère avec les flasques de poulies comme 12 et 13, etc... solidaires en rotation d'arbres menés et avec les flasques d'une poulie 14 solidaire d'un arbre menant, par exemple le vilebrequin ou l'arbre d'alternateur d'un moteur automobile, de camion, de machine agricole ou analogue. Pour assurer la tension de la courroie 10 on associe au système un tendeur destiné à rattraper son allongement afin d'éviter le glissement de la courroie par rapport aux flasques des poulies, d'une part et, d'autre part, à amortir les vibrations engendrées dans la courroie 10 par les irrégularités cycliques du régime moteur, en particulier au ralenti ou lors des à-coups se produisant à la mise en route et/ou l'arrêt des appareillages entraînés par les arbres solidaires des poulies 12, 13, etc...

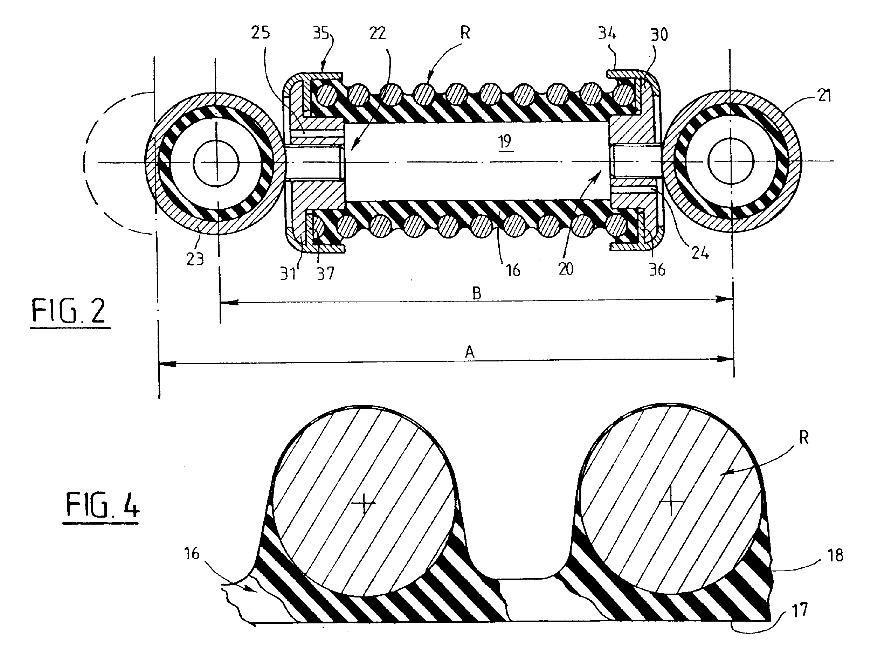

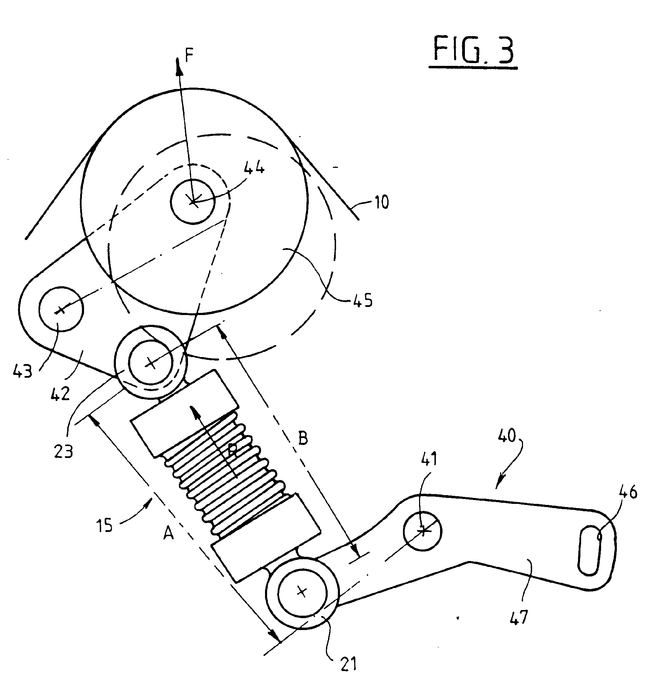

Conformément à l'invention, le tendeur 15, figures 2 et 3, comprend un ressort à boudin R solidaire par adhérisation d'une gaine en caoutchouc 16, par exemple un caoutchouc choisi parmi au moins l'un des élastomères des familles d'élastomères suivantes :

- N.R.          CSM           Epichlorhydrine C.O.
- SBR           CR            Epichlorhydrine E.C.O.
- BR            NBRPVC        P.E. chloré
- C.R.          IR            P.E. chlorosulfoné
- HNBR          I.I.R.        Elastomère fluoré
- NBR           Bromobutyl    Caoutchouc polysulfuré
- EPDM          Chlorobutyl   Caoutchouc polyacrylique
- EPR           Ethylène acrylique élastomère
- P.U.          PTFE
- Elastomères   FPM
  de silicone

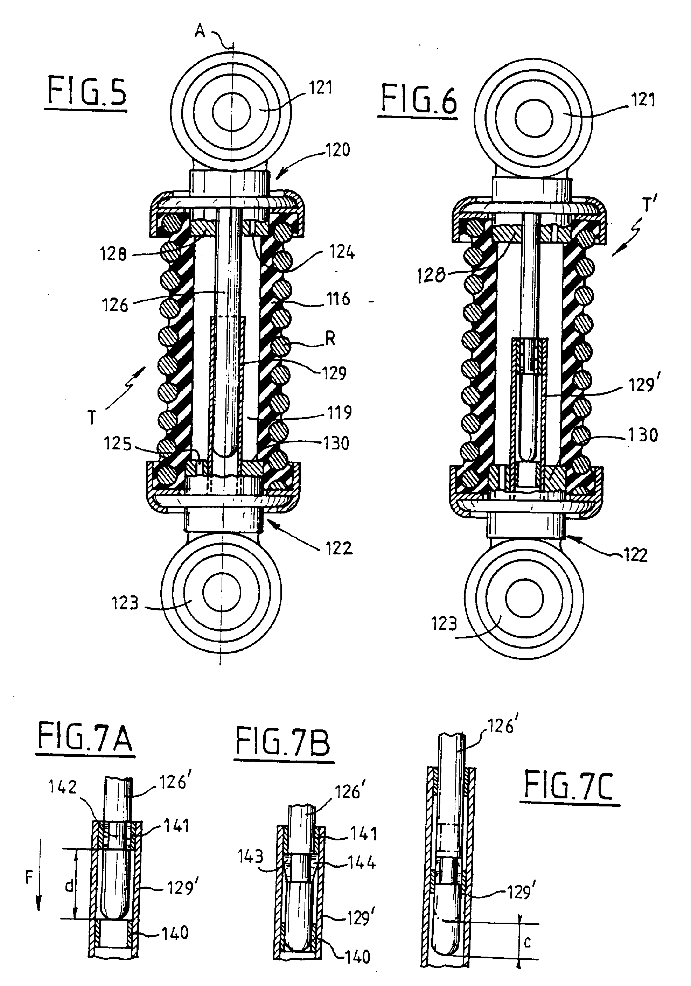

La gaine 16, cylindrique, étanche, adhérisée au ressort R de la manière montrée sur la figure 4, -c'est-à-dire quelque peu suivant un "soufflet" à surface interne lisse 17 et à "spires" 18 limitées par une fine pellicule sur la surface externe du fil métallique du ressort-, limite une chambre 19 remplie d'air, fermée à l'une de ses extrémités par un obturateur 20 dont est solidaire un oeil 21, tandis que l'autre extrémité est fermée par un obturateur 22 sur lequel est fixé un oeil 23.

Au moins l'un des obturateurs 20, 22 est percé d'un ajutage 24 ou 25 de mise en communication de la chambre 19 avec l'atmosphère, ledit ajutage étant avantageusement muni d'un organe introduisant une perte de charge comme un clapet ou un bouchon en métal fritté ou, un dispositif analogue, non représenté.

Pour la fixation des obturateurs 20 et 22 sur la gaine 16, l'invention prévoit de les conformer à leurs extrémités suivant des collerettes comme 30 et 31, serties sur les spires d'extrémité du ressort R et sur la gaine par des bagues 34 et 35, respectivement, avec interposition de rondelles métalliques 36 et 37, respectivement.

Le dispositif qui vient d'être décrit, dans lequel le ressort hélicoïdal R travaille en compression et dans lequel l'amortissement est réglé par la forme, les dimensions et les caractéristiques du matériau constitutif de la gaine 16 est mis en oeuvre, dans une forme de réalisation préférée, à l'aide d'un montage illustré sur la figure 3. Dans ce dernier, le tendeur 15 est interposé entre un premier levier 40, monté à pivotement autour d'un axe 41 et accroché sur le tendeur 15 par l'oeil 21 de ce dernier tandis que l'autre oeil 23 est attelé sur un second levier 42 réalisé sous forme d'une plaque triangulaire montée à pivotement autour d'un axe 43 et qui porte au voisinage de son troisième angle (c'est-à-dire celui distinct de l'axe 43 et de l'axe d'accrochage de l'oeil 23), l'axe 44 d'un galet 45 sur lequel s'enroule la courroie 10.

Une boutonnière 46, à l'extrémité du bras 47 du levier 40 opposé à celui d'accrochage sur l'oeil 21, permet de régler la position initiale d'une extrémité du tendeur 15 dont la longueur au montage est illustrée sur le dessin par la cote A, tandis que dans la condition comprimée du ressort R, cette cote est ramenée à celle montrée en B.

A la condition de montage du ressort correspond pour le galet 45 la position montrée en trait plein sur les figures 2 et 3 tandis que c'est la position montrée en trait interrompu qui correspond à celle de longueur minimale du ressort.

Dans une réalisation appliquée à un système de transmission de puissance à courroie mis en oeuvre dans un véhicule automobile, de bons résultats ont été obtenus à l'aide d'un ressort hélicoïdal à boudin ayant dans sa condition de montage un pas d'environ 7 mm, un diamètre moyen d'environ 12 mm et un rayon du fil métallique de ressort d'environ 2 mm.

Avec un tel ressort la gaine 16 de caoutchouc en HNBR avait un diamètre interne de sa surface 17 de l'ordre de 6 mm à 14 mm tandis que la longueur du dispositif au montage était de l'ordre de 95 mm et la longueur minimale à l'état comprimé du ressort de l'ordre de 80 mm. Dans la première condition, c'est-à-dire au montage, la force F exercée par le galet 45 sur la courroie 10 avait une valeur de l'ordre de 220 N tandis que la force correspondante F dans la condition de longueur minimale du ressort était de l'ordre de 800 N.

On se réfère maintenant à la figure 5 relative à une autre forme de réalisation. Dans celle-ci, une gaine en caoutchouc 116, solidaire par adhérisation d'un ressort à boudin R limite une chambre 119 remplie d'air, fermée à l'une de ses extrémités par un obturateur 120 dont est solidaire un oeil 121 tandis que l'autre extrémité est fermée par un obturateur 122 sur lequel est fixé un oeil 123. Au moins l'un des obturateurs 120, 122 est percé d'un ajutage comme 124 ou 125 de mise en communication de la chambre 119 avec l'atmosphère, ledit ajutage étant avantageusement muni d'un organe introduisant une perte de charge, comme un clapet ou un bouchon en métal fritté ou un dispositif analogue.

Conformément à l'invention, on prévoit de loger à l'intérieur de la gaine en élastomère 116 des moyens de guidage, l'une par rapport à l'autre, des extrémités de la chambre 119 lors du déplacement relatif de celles-ci. De façon plus précise, on associe à l'obturateur 120 une tige 126, coaxiale à l'axe longitudinal A du dispositif, sertie ou emmanchée à force dans le corps 128 de l'obturateur 120 et à l'obturateur 122 un tube 129 fixé par sertissage ou emmanchage à force dans le corps 130 dudit obturateur.

Les diamètres de la tige 126 et du tube 129 sont appariés pour que la tige et le tube puissent coulisser l'un par rapport à l'autre librement mais sans jeu excessif, la tige 126 étant logée sur environ la moitié de sa longueur dans le tube 129.

Le tube et la tige sont avantageusement réalisés en acier de dureté égale ou supérieure à 60 HRC (dureté ROCKWELL) pour éviter toute usure intempestive mais d'autres matériaux peuvent bien entendu être mis en oeuvre, par exemple d'autres alliages à base de fer ou des aciers de nuances différentes, des alliages d'aluminium, de cuivre, d'étain, de plomb ou ces matériaux eux-mêmes.

Le tube et la tige sont de préférence en le même matériau, sans qu'aucune limitation ne soit cependant attachée à cette indication, de bons résultats en ce qui concerne le guidage étant également obtenus lorsque le tube et la tige sont en des matériaux différents.

En fonction, précisément, de ces matériaux, l'invention prévoit de lubrifier la tige 126 et/ou le tube 129 à l'aide d'une huile usuelle pour le graissage d'organes en translation ou à l'aide d'une graisse du type de celle utilisée pour les roulements à billes.

En variante, la tige et le tube ou des chemises qui leur sont associées sont en des matériaux auto-lubrifiés, du type de ceux connus et mis en oeuvre dans les glissières, coulisses ou analogues de machines usuelles.

Quelles que soient les caractéristiques mécaniques et géométriques du ressort R, la présence des moyens de guidage qui viennent d'être décrits permettent de pallier tout risque de flambage, nonobstant le mode de travail en compression du tendeur.

C'est un même résultat qui est obtenu dans la réalisation illustrée sur les figures 6 et 7 où, toutefois, l'invention prévoit de faire application des organes de guidage non seulement pour pallier tout risque de flambage mais aussi pour imposer au ressort R une pré-contrainte propre à favoriser le fonctionnement du dispositif de tendeur dans certaines conditions d'utilisation. Pour ce faire, le tendeur T′ identique au tendeur T de la réalisation précédente en ce qui concerne sa constitution générale et où, par suite, les mêmes organes portent les mêmes références, est muni d'un tube 129′ et d'une tige 126′ sertis ou emmanchés à force dans le corps 130 de l'obturateur 122 et dans le corps 128 de l'obturateur 120, respectivement. Le tube 129′ est garni intérieurement de deux chemises 140 et 141 distantes l'une de l'autre d'une longueur $\underline{d}$, figure 7A ou, en variante, est garni d'une seule chemise présentant des lumières longitudinales de longueur $\underline{d}$. Le diamètre interne de cette chemise unique percée de lumières où le diamètre interne des chemises 140 et 141 correspond au diamètre externe de la tige 126′ laquelle présente au droit d'une partie 142 de plus petit diamètre deux lames de ressort dirigées longitudinalement 143 et 144. Lesdites lames de ressort éclipsées dans la condition montrée sur la figure 7A permettent le libre coulissement de la tige 126′ dans le tube 129′, suivant la direction de la flèche F pour la mise en pré-contrainte du ressort R, pré-contrainte dont la valeur est déterminée par la position relative de la tige et du tube montrée sur la figure 7B en laquelle les lames de ressort 143 et 144 ont échappé à la chemise 141. La course de travail est alors celle montrée en $\underline{c}$ sur la figure 7C.

## Revendications

1.  Tendeur pour courroie de transmission de puissance comprenant un ressort de rappel (R) associé mécaniquement à un galet tendeur (45) avec lequel coopère une courroie (10) pour commander le déplacement dudit galet sous l'action dudit ressort, lequel est solidaire d'une gaine de caoutchouc (16; 116) qui forme une chambre (19; 119) fermée à ses extrémités par des obturateurs (20, 22; 120,122) avec lesquels coopèrent des moyens de montage dans un système de transmission de puissance,
    caractérisé en ce que:
    a) pour obtenir l'amortissement des vibrations susceptibles de prendre naissance dans la courroie ladite gaine de caoutchouc (16; 116) est conformée quelque peu suivant un soufflet à surface interne lisse (17) et à spires (18) limitées par une fine pellicule sur la surface externe du fil métallique du ressort (R); et en ce
    b) qu'au moins un des obturateurs (20, 22; 120, 122) qui ferment ladite chambre (19; 119) est muni d'un ajutage (24, 25; 124) d'entrée et/ou de sortie d'air dans et/ou hors de ladite chambre.

**2.** Tendeur selon la revendication 1, caractérisé en ce que le ressort (R) est un ressort hélicoïdal à boudin travaillant en compression rendu solidaire par adhérisation de la face externe de la gaine de caoutchouc (16; 116) de forme générale cylindrique introduisant l'effet d'amortissement, les obturateurs d'extrémités (20, 22 ; 120, 122) limitant longitudinalement la chambre (19, 119) formée par la gaine étant sertis à étanchéité sur cette dernière.

**3.** Tendeur selon l'une quelconque des revendications précédentes, caractérisé en ce qu'à l'ajutage (24, 25; 124) ménagé dans un au moins des obturateurs (20, 22 ; 120, 122) de la gaine (16; 116) est associé un dispositif introduisant une perte de charge permettant de moduler complémentairement l'effet d'amortissement.

**4.** Tendeur selon la revendication 3, caractérisé en ce que le dispositif introduisant une perte de charge est un clapet, un bouchon de métal fritté ou un organe analogue.

**5.** Tendeur selon l'une quelconque des revendications précédentes, caractérisé en ce que les moyens de montage sont un premier oeil (21; 121) solidaire d'un des obturateurs d'extrémité de la chambre (19; 119) et un second oeil (23; 123) solidaire de l'autre obturateur avec lequel coopère un organe (42) du type levier monté à pivotement et qui porte ledit galet (45) coopérant avec la courroie (10).

**6.** Tendeur selon l'une quelconque des revendications précédentes, caractérisé en ce que le matériau constitutif de la gaine (16; 116) de caoutchouc est choisi en fonction des caractéristiques d'amortissement souhaitées, d'une part, et des conditions de l'environnement d'utilisation d'autre part, de préférence parmi au moins un des éléments des familles d'élastomères suivantes:

```
–  N.R.           CSM            Epichlorhydrine C.O.
–  SBR            CR             Epichlorhydrine E.C.O.
–  BR             NBRPVC         P.E. chloré
–  C.R.           IR             P.E. chlorosulfoné
–  HNBR           I.I.R.         Elastomère fluoré
–  NBR            Bromobutyl     Caoutchouc polysulfuré
–  EPDM           Chlorobutyl    Caoutchouc polyacrylique
–  EPR            Ethylène acrylique élastomère
–  P.U.           PTFE
–  Elastomères    FPM
   de silicone
```

**7.** Tendeur selon l'une quelconque des revendications précédentes, caractérisé en ce qu'il comprend, à l'intérieur de la gaine (116) en élastomère définissant la chambre (119), des moyens de guidage l'une par rapport à l'autre des extrémités de ladite chambre (119) lors de leur déplacement relatif.

**8.** Tendeur selon la revendication 7, caractérisé en ce que les moyens de guidage sont constitués par un ensemble de tige (126, 126')) et de tube (129, 129') fixés à l'un et l'autre desdits obturateurs (120, 122), respectivement, les matériaux constitutifs de la tige et du tube étant choisis parmi les aciers ou autres alliages à base de fer, l'aluminium et ses alliages, le cuivre et ses alliages, l'étain et ses alliages, le plomb et ses alliages.

**9.** Tendeur selon l'une quelconque des revendications 7 et 8, caractérisé en ce que les matériaux constitutifs de la tige et du tube sont des aciers de dureté égale ou supérieure à 60 HRC (dureté ROCKWELL).

**10.** Tendeur selon la revendication 8, caractérisé en ce que le tube (129, 129') et la tige (126, 126') sont en le même matériau.

**11.** Tendeur selon la revendication 8, caractérisé en ce que le tube (129, 129') et la tige (126, 126') sont en des matériaux différents.

12. Tendeur selon l'une quelconque des revendications 7 à 11, caractérisé en ce que les organes de guidage des extrémités de la chambre (119) sont lubrifiés à l'aide d'une huile choisie parmi les huiles usuelles pour le graissage d'organes mécaniques ou parmi les graisses du type de celles utilisées pour les roulements à billes.

13. Tendeur selon l'une quelconque des revendications 7 à 11, caractérisé en ce que les organes de guidage sont du type auto-lubrifiés.

14. Tendeur selon l'une quelconque des revendications 7 à 13, caractérisé en ce que les organes de guidage sont organisés pour permettre la mise sous précontrainte du ressort de rappel (R).

15. Tendeur selon la revendication 14, caractérisé en ce que les organes de guidage (126', 129') sont munis de moyens d'encliquetage disposés sur le tube et la tige, respectivement, pour empêcher le ressort de prendre toute l'extension qui serait autrement possible.

16. Tendeur selon la revendication 15, caractérisé en ce que lesdits moyens d'encliquetage comprennent des lames de ressort élastique (143, 144) solidaires de la tige (126') propres à se loger lorsqu'elles sont déployées dans l'espace séparant deux chemises (140, 141) logées dans le tube (129') ou dans des lumières d'une chemise unique garnissant ledit tube.

**Claims**

1. Tightener for a power transmission belt, comprising a return spring (R) associated mechanically with a tensioning roller (45) with which there cooperates a belt (10) so as to control the displacement of the said roller under the action of the said spring, which spring is integral with a rubber sheath (16; 116) which forms a chamber (19; 119) closed at its ends by stoppers (20, 22; 120, 122) with which there cooperate means for mounting in a power transmission system,
characterised in that:
   a) to ensure the damping of the vibrations liable to arise in the belt, the said rubber sheath ( 16; 116 ) is shaped somewhat like a bellows with a smooth inner surface ( 17 ) and with turns ( 18 ) limited by a thin film on the outer surface of the metal wire of the spring (R); and in that
   b) at least one of the stoppers (20, 22; 120, 122) which close the said chamber (19; 119) is provided with a nozzle (24, 25; 124) for the entry and/or exit of air into or out of the said chamber.

2. Tightener according to Claim 1, characterised in that the spring (R) is a helical spring working in compression and made integral, by rendering adhesive the outer face of the rubber sheath (16; 116) having the general shape of a cylinder and introducing the damping effect, the end stoppers (20, 22; 120, 122) longitudinally limiting the chamber (19, 119) formed by the sheath being crimped in leak-tight fashion on the latter.

3. Tightener according to any one of the preceding claims, characterised in that, associated with the nozzle (24, 25; 124) provided in at least one of the stoppers (20, 22; 120, 122) of the sheath (16; 116) is a device introducing a pressure drop allowing the damping effect to be modulated in complementary fashion.

4. Tightener according to Claim 3, characterised in that the device introducing a pressure drop is a flap, a sintered metal plug or a similar component.

5. Tightener according to any one of the preceding claims, characterised in that the mounting means are a first eye (21; 121) integral with one of the end stoppers of the chamber (19; 119) and a second eye (23; 123) integral with the other stopper, with which there cooperates a pivotably mounted lever-type member (42) which supports the said roller (45) cooperating with the belt (10).

6. Tightener according to any one of the preceding claims, characterised in that the material of which the rubber sheath (16; 116) is composed is chosen as a function of the desired damping characteristics, on the one hand, and of the conditions of the environment in which it is to be used, on the other hand, preferably among at least one of the members of the following classes of elastomers:

7

|          |                            |                           |
|----------|----------------------------|---------------------------|
| – NR     | CSM                        | epichlorohydrin CO        |
| – SBR    | CR                         | epichlorohydrin ECO       |
| – BR     | NBRPVC                     | chlorinated PE            |
| – CR     | IR                         | chlorosulphonated PE      |
| – HNBR   | IIR                        | fluorinated elastomer     |
| – NBR    | bromobutyl                 | polysulphide rubber       |
| – EPDM   | chlorobutyl                | polyacrylic rubber        |
| – EPR    | ethylene acrylic elastomer |                           |
| – PU     | PTFE                       |                           |
| – silicone | FPM                      |                           |
| elastomers |                          |                           |

7. Tightener according to any one of the preceding claims, characterised in that, inside the elastomer sheath (116) defining the chamber (119) it comprises means of guidance, with respect to each other, of the ends of the said chamber (119) during their relative displacement.

8. Tightener according to Claim 7, characterised in that the means of guidance are formed by a rod (126, 126′) and tube (129, 129′) assembly each fixed to one of the said stoppers (120, 122) respectively, the materials of which the rod and the tube are composed being chosen from among the steels or other iron-based alloys, aluminium and its alloys, copper and its alloys, tin and its alloys, lead and its alloys.

9. Tightener according to either of Claims 7 and 8, characterised in that the materials of which the rod and the tube are composed are steels with a hardness equal to or greater than 60 HRC (ROCKWELL hardness).

10. Tightener according to Claim 8, characterised in that the tube (129, 129′) and the rod (126, 126′) are made of the same material.

11. Tightener according to Claim 8, characterised in that the tube (129, 129′) and the rod (126, 126′) are made of different materials.

12. Tightener according to any one of Claims 7 to 11, characterised in that the components for guiding the ends of the chamber (119) are lubricated with an oil chosen from among the usual oils for lubricating mechanical components or from among the greases of the type used for ball-bearings.

13. Tightener according to any one of Claims 7 to 11, characterised in that the guiding components are of the self-lubricated type.

14. Tightener according to any one of Claims 7 to 13, characterised in that the guiding components are organised to allow prestressing of the return spring (R).

15. Tightener according to Claim 14, characterised in that the guiding components (126′, 129′) are provided with ratchet means arranged on the tube and the rod respectively, to prevent the spring from assuming the entire extension that would otherwise be possible.

16. Tightener according to Claim 15, characterised in that the said ratchet means comprise elastic spring leaves (143, 144) integral with the rod (126′) and capable of lodging when they are spread in the space between two jackets (140, 141) housed in the tube (129′) or in slots of a single jacket lining the said tube.

**Patentansprüche**

1. Spannglied für Transmissionskraftriemen mit einer mechanisch einer Spannrolle (45) zugeordneten Rückstellfeder (R), mit der ein Riemen (10) zur Steuerung der Verschiebung dieser Rolle unter der Wirkung dieser Feder zusammenwirkt, die fest mit einer Kautschukhülle (16; 116) ist, die eine Kammer (19; 119) bildet, die an ihren Enden durch Verschlußelemente (20, 22; 120, 122) geschlossen ist, mit denen Montagemittel in einem Krafttransmissionssystem zusammenwirken,

dadurch gekennzeichnet, daß:

a) um die Dämpfung der Vibrationen zu erhalten, die in der Lage sind, ihren Ursprung im Riemen zu nehmen, diese Kautschukhülle (16; 116) etwa entsprechend einem Balgen mit glatter Innenfläche (17) und mit Spiralwindungen (18) geformt ist, die durch eine feine Folie auf der Oberfläche des metallischen Drahtes der Feder (R) begrenzt sind; und daß

b) wenigstens eines der Verschlußelemente (20, 22; 120, 122), die diese Kammer (19; 119) schließen, mit einer Düse (24, 25; 124) zum Eintritt und/oder Austritt von Luft in oder aus der Kammer versehen ist.

2. Spannglied nach Anspruch 1, dadurch gekennzeichnet, daß die Feder (R) eine auf Druck arbeitende Spiralschraubfeder ist, die durch Haften fest mit der Außenfläche der Kautschukhülle (16, 116) von im wesentlichen zylindrischer Gestalt gemacht ist und den Dämpfungseffekt einführt, wobei die endseitigen Verschlußglieder (20, 22, 120, 122) in Längsrichtung die Kammer (19, 119) begrenzen, die durch die Hülle gebildet ist, welche dicht auf letzterer gebördelt ist.

3. Spannglied nach einem der vorhergehenen Ansprüche, dadurch gekennzeichnet, daß der in wenigstens einem der Verschlußglieder (20, 22, 120, 122) der Hülle (16, 116) ausgesparten Düse (24, 25, 124) ein Gerät zugeordnet ist, das einen Druckverlust einführt, welches es ermöglicht, komplementär den Dämpfungseffekt zu modulieren.

4. Spannglied nach Anspruch 3, dadurch gekennzeichnet, daß das den Druckverlust einführende Gerät ein Klappenventil, ein Stopfen aus Sintermetall oder ein analoges Organ ist.

5. Spannglied nach einem der vorhergehenden Ansprüche, dadurch gekennzeichnet, daß die Montagemittel ein erstes Auge (21, 121), das mit einem der endseitigen Verschlußglieder der Kammer (19, 119) fest ist und ein zweites Auge (23, 123) sind, das fest mit dem anderen Verschlußglied ist, mit dem ein Organ (42) vom Hebeltyp zusammenwirkt, das schwenkbar gelagert ist und das diese Rolle (45), die mit den Riemen (10) zusammenwirkt, trägt.

6. Spannglied nach einem der vorgergehenden Ansprüche, dadurch gekennzeichnet, daß das die in Kautschukhülle (16,116) bildende Material gewählt ist als Funktion der gewünschten Dämpfungseigenschaften einerseits und der Bedingungen in der Benutzungsumgebung andererseits, vorzugsweise unter wenigstens einem der Elemente der folgenden Elastomerfamilien:

| | | |
|---|---|---|
| – N.R. | CSM | Epichlorhydrin C.O. |
| – SBR | CR | Epichlorhydrin E.C.O. |
| – BR | NBRPVC | chloriertes P.E. |
| – C.R. | IR | chlorsulfoniertes P.E. |
| – HNBR | I.I.R. | fluoriertes Elastomer |
| – NBR | Brombutyl | polysulfurierter Kautschuk |
| – EPDM | Chlorbutyl | Polyacryl-Kautschuk |
| – EPR | Ethylenacryl-Elastomer | |
| – P.U. | PTFE | |
| – Silikon-Elastomere | FPM | |

7. Spannglied nach einem der vorhergehenden Ansprüche, dadurch gekennzeichnet, daß es im Inneren der die Kammer (119) bildenden Hülle (116) aus Elastomer Mittel zum Führen der Enden dieser Kammer (119) bezüglich einander während deren Relativverschiebung umfaßt.

8. Spannglied nach Anspruch 7, dadurch gekennzeichnet, daß die Führungsmittel gebildet sind aus einer Anordnung von Stangen (126, 126′) und Rohren (129, 129′), die an dem einen und dem anderen dieser Verschlußglieder (120, 122) jeweils befestigt sind, wobei die die Stange und das Rohr bildenden Materialien gewählt sind aus den Stählen oder anderen Legierungen, dem Kupfer und seinen Legierungen, dem Zinn und seinen Legierungen, dem Blei und seinen Legierungen.

9. Spannglied nach einem der Ansprüche 7 und 8, dadurch gekennzeichnet, daß die die Stange und das Rohr bildenden Materialien Stähle von einer Härte gleich oder gröber 60 HRC (ROCKWELL Härte) sind.

10. Spannglied nach Anspruch 8, dadurch gekennzeichnet, daß das Rohr (129, 129') und die Stange (126, 126') aus ein und dem gleichen Material bestehen.

11. Spannglied nach Anspruch 8, dadurch gekennzeichnet, daß das Rohr (129, 129') und die Stange (126, 126') aus unterschiedlichen Materialien bestehen.

12. Spannglied nach einem der Ansprüche 7 bis 11, dadurch gekennzeichnet, daß die Führungsorgane für die Enden der Kammer (119) mit Hilfe eines Öls geschmiert sind, das gewählt ist aus den üblichen Ölen für das Schmieren der mechanischen Organe oder aus den Fetten vom Typ wie sie für Kugellager vervendet werden.

13. Spannglied nach einem der Ansprüche 7 bis 11, dadurch gekennzeichnet, daß die Führungsorgane vom selbstschmierenden Typ sind.

14. Spannglied nach einem der Ansprüche 7 bis 13, dadurch gekennzeichnet, daß die Führungsorgane so organisiert sind, daß sie es ermöglichen, die Rückstellfeder (R) unter Vorspannung zu setzen.

15. Spannglied nach Anspruch 14, dadurch gekennzeichnet, daß die Führungsorgane (126', 129') mit auf dem Rohr und der Stange angeordneten Rastmitteln jeweils versehen sind, um zu verhindern, daß die Feder jede Dehnung bzw. Längung, die sonst möglich wäre, annimmt.

16. Spannglied nach Anspruch 15, dadurch gekennzeichnet, daß die Rastmittel elastische Blattfedern (143, 144) umfassen, die fest mit der Stange (126') verbunden sind und von der Art sind, daß sie sich im entfalteten Zustand in dem Raum lagern, der zwei Büchsen (140, 141) trennt, die im Rohr (129') oder in Schlitzen einer einzigen dieses Rohres auskleidenden Büchse gelagert sind.

## FIG.1

FIG. 2

FIG. 4

EP 0 407 261 B1

## FIG. 3

13

FIG.5

FIG.6

FIG.7A

FIG.7B

FIG.7C